# FASCICULE DE BREVET EUROPEEN

(11) **EP 2 088 416 B1**
(45) Date de publication et mention de la délivrance du brevet: **09.03.2011**
(21) Numéro de dépôt: 09290013.3
(22) Date de dépôt: 07.01.2009
(51) Int. Cl.: G01M 13/04

(54) **Procédé d'estimation des composantes du torseur d'efforts s'appliquant sur un palier**
Abschätzverfahren der Kraftanteile eines Kraftwinders, die auf ein Lager einwirken
Method for estimating the components of the force wrench applied to a bearing

(30) Priorité: 08.02.2008 FR 0800688
(43) Date de publication de la demande: 12.08.2009
(73) Titulaire: SNR Roulements, 74000 Annecy (FR)
(72) Inventeur: Duret, Christophe, 74600 Quintal (FR); Kwapisz, David, 74330 Choisy (FR); Laurent, Alexandre, 74940 Annecy le Vieux (FR)
(74) Mandataire: Sayettat, Julien Christian

(56) Documents cités:
- WO-A-2005/008204
- WO-A-2005/040745
- US-A1- 2002 057 856
- US-A1- 2005 119 840

## Description

L'invention concerne un procédé d'estimation des composantes d'un torseur d'efforts s'appliquant sur un palier comprenant un organe fixe, un organe tournant et au moins une rangée de corps roulants disposée entre lesdits organes pour permettre leur rotation relative.

En particulier, l'invention s'applique à des roulements de roue de véhicule automobile, la bague fixe étant destinée à être solidaire du châssis du véhicule, la roue étant destinée à être montée en rotation par l'intermédiaire de la bague tournante, et deux rangées de billes étant prévues entre lesdites bagues.

Dans de nombreuses applications, notamment en relation avec les systèmes d'assistance et de sécurité tels que l'ABS ou l'ESP, il est nécessaire de déterminer les efforts qui s'appliquent à l'interface entre la roue et la chaussée sur laquelle ladite roue tourne.

Pour ce faire, il est connu d'effectuer des mesures au niveau du pneu ou au niveau du châssis. Toutefois, la mesure au niveau du pneu pose des problèmes importants liés à l'instrumentation d'une pièce tournante, notamment relativement :
- à l'alimentation des capteurs, car une batterie n'a pas une durée de vie suffisante ;
- à la transmission du signal, qui doit se faire avec une fréquence et une fiabilité suffisantes pour pouvoir agir sur les systèmes d'assistance et de sécurité. Même si des solutions existent, cette transmission sans fil devient d'autant plus compliquée que le nombre d'informations à transmettre est important et que ces informations sont à recevoir en temps réel ;
- au calcul des efforts dans un repère fixe. Il est notamment nécessaire de connaître en permanence la position du repère tournant par rapport au repère fixe.

Concernant la mesure au niveau du châssis, elle est rendue difficile par la répartition des efforts entre les différents organes qui relient la roue audit châssis (biellette de direction, triangle de suspension, amortisseur, ...).

Par conséquent, comme proposé notamment dans le document FR-2 812 356, la bague fixe, qui est le premier organe de liaison entre la roue et le châssis, peut être avantageusement utilisée en tant que support pour la détermination des efforts qui s'exercent à l'interface entre la roue et la chaussée lors des déplacements du véhicule.

En particulier, la détermination des efforts est réalisée par mesure des déformations de la bague fixe qui sont induites par le passage des corps roulants. En effet, l'amplitude de ces déformations est représentative des efforts transmis par le roulement. Toutefois, la difficulté est d'extraire des mesures de déformations l'information relative aux composantes du torseur d'efforts qui s'applique sur le roulement.

Pour tenter de résoudre ce problème, le document WO-2005/040745 présente un algorithme dont une partie est basée sur un réseau de neurones pour faire le lien entre les mesures de déformations et les composantes du torseur. L'inconvénient de ce type de méthode, dite « boîte noire », est sa robustesse vis-à-vis de situations qui n'ont pas été prise en compte lors de la phase d'apprentissage. Un autre point bloquant est la non prise en compte de la précharge qui est un facteur de premier ordre dans le comportement du roulement, et ce d'autant plus que cette précharge peut varier au cours du temps avec l'évolution de la température mais varie surtout entre différents roulements de part les dispersions de fabrication.

Par ailleurs, le document WO-2005/008204 présente un procédé basé sur un modèle physique issu d'un calcul éléments finis, dans lequel :
- les forces de contact billes/bague sont calculées à partir de la résolution dudit modèle physique en fonction des mesures de déformations effectuées ; et
- le torseur d'efforts est calculé en sommant les différentes forces de contact.

Le premier inconvénient de cette méthode est le nombre d'inconnues. En effet, le système d'équations à résoudre comporte comme inconnues l'ensemble des forces de contact.

Le second inconvénient vient du traitement fréquentiel nécessaire à l'élaboration d'une estimation des composantes du torseur. Par conséquent, ce procédé n'offre pas de grande performance en terme de bande passante puisqu'il est basé sur une expression fréquentielle du comportement du roulement.

L'invention vise à résoudre les problèmes de l'art antérieur en proposant notamment un procédé d'estimation des composantes du torseur d'efforts transmis par un palier, dans lequel, à partir de mesures de déformation d'au moins une zone de l'organe fixe dudit palier, un modèle physique du palier est utilisé puis inversé de façon itérative. Ce procédé permet en outre de limiter le nombre d'inconnues à estimer et autorise une grande bande passante.

A cet effet, l'invention propose un procédé d'estimation des composantes du torseur d'efforts s'appliquant sur un palier comprenant un organe fixe, un organe tournant et au moins une rangée de corps roulants disposée entre lesdits organes pour permettre leur rotation relative, ledit procédé prévoyant de mesurer un vecteur de N déformations d'au moins une zone de l'organe fixe dudit palier qui sont induites par ledit torseur et d'utiliser un modèle physique liant un vecteur d'au plus N valeurs représentatives des composantes dudit torseur à un vecteur de mesure des déformations, ledit procédé comprenant les étapes itératives suivantes :
- introduire un vecteur de valeurs représentatives dans le modèle pour calculer un vecteur de mesure des déformations ;
- effectuer un test de pertinence entre le vecteur de mesure des déformations qui est calculé et ledit vecteur mesuré ; et
   o si le test est négatif, établir au moins un nouveau vecteur de valeurs représentatives à introduire dans le modèle en fonction du résultat dudit test ; ou
   o si le test est positif, stocker le vecteur de valeurs introduit ;
dans lequel les composantes estimées du torseur d'efforts sont établies en fonction d'au moins un vecteur de valeurs stocké.

D'autres objets et avantages de l'invention apparaîtront dans la description qui suit, faite en référence aux figures annexées, dans lesquelles :
- la figure 1 est un schéma synoptique de la mise en oeuvre du procédé d'estimation selon un mode de réalisation de l'invention ;
- la figure 2 est un schéma synoptique d'une variante du procédé suivant la figure 1, ledit schéma illustrant les étapes de test et d'établissement du nouveau vecteur de valeurs représentatives à introduire dans le modèle.

En relation avec ces figures, on décrit ci-dessous un procédé d'estimation des composantes du torseur d'efforts s'appliquant sur un palier à roulement. Ce mode de réalisation est décrit en relation avec un roulement de roue de véhicule automobile comprenant une bague extérieure fixe destinée à être associée au châssis du véhicule, une bague intérieure tournante sur laquelle est destinée à être montée la roue et deux rangées de billes. Toutefois, le procédé selon l'invention peut être mis en oeuvre sur d'autres types de palier à roulement, ainsi que pour d'autres applications automobiles ou autres.

Lors du déplacement du véhicule, la roue tourne sur la chaussée en induisant des efforts à leur interface, lesdits efforts étant transmis au châssis par l'intermédiaire du roulement. Par conséquent, la détermination de ces efforts, notamment en vu d'alimenter les systèmes d'assistance et de sécurité du véhicule, peut être réalisée en estimant temporellement les composantes du torseur d'efforts qui s'applique sur le roulement.

Pour ce faire, le procédé prévoit de mesurer les déformations de la bague fixe qui sont induites par le torseur d'efforts qui s'applique sur le roulement, notamment lors du passage des billes.

Selon une réalisation, les mesures des déformations peuvent être réalisées selon l'un des documents FR-2 869 980, FR-2 869 981, FR-2 869 982 ou FR-2 869 966, c'est-à-dire en disposant des barrettes de jauges de déformation sur des zones privilégiées de la périphérie de la bague fixe. En effet, les jauges délivrent alors chacune un signal temporelle pseudo sinusoïdal qui est fonction des déformations de ladite zone, lesdits signaux pouvant être conditionnés pour déterminer l'amplitude des déformations subies. Toutefois, l'invention n'est pas limitée à un emplacement et/ou à un conditionnement particulier des jauges pour mesurer les déformations de la bague fixe.

Dans le mode de réalisation décrit, on mesure un vecteur Vₘ de N déformations d'au moins une zone de la bague fixe. En particulier, N zones de la bague fixe peuvent être instrumentées chacune avec une barrette de jauges, de sorte à délivrer N amplitudes de déformations qui sont indépendantes.

Le procédé prévoit d'utiliser un modèle physique liant un vecteur Q d'au plus N valeurs représentatives des composantes du torseur à un vecteur de N mesures des déformations. Ainsi, en introduisant un tel vecteur de valeurs représentatives dans le modèle, il est possible de calculer un vecteur de mesure de déformations.

Selon une réalisation, le vecteur Q de valeurs représentatives comprend cinq variables suivant respectivement un degré de liaison du palier, le degré de liberté complémentaire aux degrés de liaison correspondant à la rotation de la bague intérieure dans la bague extérieure suivant l'axe de rotation du palier. En particulier, ces cinq variables peuvent être choisies parmi les composantes du torseur d'efforts ou les déplacements de la bague tournante par rapport à la bague fixe.

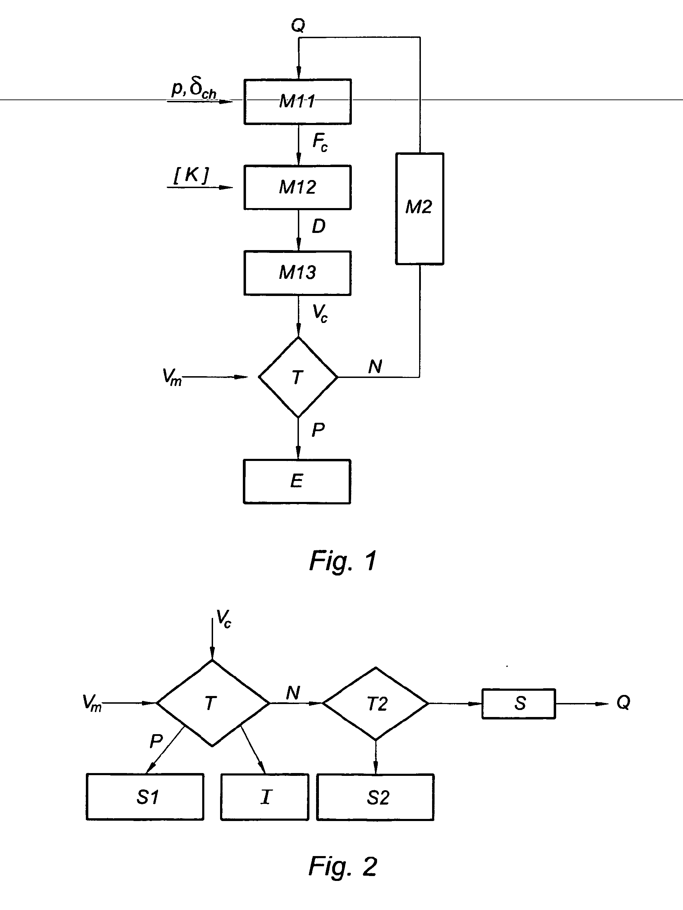

En relation avec l'utilisation de ces variables, la figure 1 représente un modèle physique comprenant trois modules M11, M12, M13 de respectivement du lien entre le vecteur Q et de la zone de charge, du lien entre la zone de charge et les déformations de l'organe fixe et de la fonction de transfert du capteur de mesure.

Le module M11 de modélisation du lien entre le vecteur Q et de la zone de charge permet de relier mathématiquement les variables introduites, soit les composantes du torseur ou les déplacements, aux forces de contact *F_{c}* entre chacune des billes et la bague fixe de sorte à déterminer lesdites forces de contact. En particulier, cette relation permet de réduire le nombre de variables à estimer, notamment entre cinq et huit dans le mode de réalisation décrit.

En effet, la transmission des efforts dans un roulement se fait par les corps roulants de sorte que le torseur transmis par le roulement peut se décomposer en un ensemble de forces de contact billes/bague. Cette répartition se fait selon des lois physiques impliquant les paramètres géométriques du roulement, les matériaux constitutifs des différents éléments du roulement, ainsi que la précharge.

Une variable importante dans cette répartition est la configuration angulaire θ des billes dans chacune des rangées par rapport à un repère fixe.

De nombreux modèles, présents dans la littérature, décrivent les lois non linéaires régissant cette répartition. Les paramètres géométriques et de matériaux sont contenus dans le vecteur *p* et la précharge représentée par δ*_{ch}*. Les configurations angulaires des billes des deux rangées sont respectivement représentées par les angles θ₁ et θ₂.

Dans le mode de réalisation représenté, le vecteur Q de valeurs représentatives comprend en outre les angles θ₁ et θ₂, la précharge δ*_{ch}* ainsi que le vecteur *p* étant fixés. Ainsi, la mise en oeuvre du procédé permet conjointement d'estimer la valeur des angles θ₁ et θ₂. En variante, dans le cas où la précharge est un paramètre mal connu que l'on souhaite également estimer, le vecteur de valeurs peut comprendre en outre ladite précharge. Selon une autre variante, les angles θ₁ et θ₂ peuvent être déterminés par ailleurs pour être ensuite introduits dans le modèle.

Le module M12 de modélisation du lien entre la zone de charge et les déformations de l'organe fixe permet l'estimation des déformations D des zones instrumentées de l'organe fixe qui sont induites par les forces de contact *F_{c}* déterminées dans le module précédent.

Les forces de contact *F_{c}* s'appliquent à la bague fixe et sont équilibrées par des forces de réaction aux liaisons de ladite bague. Elles génèrent donc une déformation de la bague fixe selon les lois classiques de la mécanique des milieux continus. Le modèle M12 de déformation de la bague fixe peut être obtenu par éléments finis ou par identification expérimentale des coefficients de raideur [*K*] qui sont nécessaires audit module.

Selon une réalisation, les forces de contact *F_{c}* peuvent être exprimées sous forme modale pour estimer les déformations de la zone de l'organe fixe. Ainsi, les forces de contact *F_{c}* sont sous une forme plus compacte et plus pratique pour le calcul. Par exemple, on peut calculer la série de Fourier, selon l'angle θ, des forces de contact *F_{c}* pour obtenir l'expression modale des forces de contact, le module utilisant alors des coefficients de raideurs modales associés. La sortie du module donne alors une représentation modale de la déformation de la bague fixe au niveau des zones instrumentées.

Le module M13 permet de déterminer in fine les mesures associées aux déformations D estimées par le module précédent en modélisant notamment la fonction de transfert du capteur de déformation et de son conditionnement électronique.

Les modules M12 et M13 peuvent en outre être regroupés partiellement ou totalement de sorte à simplifier l'identification expérimentale des coefficients de raideurs [*K*] qui sont nécessaires audit modules.

Pour estimer les composantes du torseur, le procédé comprend les étapes itératives suivantes :
- introduire un vecteur Q de valeurs représentatives dans le modèle pour calculer un vecteur V_{c} de mesure des déformations ;
- effectuer un test de pertinence T entre le vecteur V_{c} de mesure des déformations qui est calculé et ledit vecteur mesuré Vₘ ; et
   o si ledit test est négatif N, établir au moins un nouveau vecteur Q de valeurs représentatives à introduire dans le modèle en fonction du résultat dudit test ; ou
   o si ledit test est positif P, stocké le vecteur Q de valeurs introduit.

Ainsi, en introduisant un premier vecteur Q dans le modèle, il est possible d'affiner itérativement les variables dudit vecteur jusqu'à obtenir une estimation acceptable desdites variables. En outre, il est possible d'introduire initialement dans le modèle un vecteur Q établi a priori ou, pour limiter le nombre d'itérations, un vecteur Q dont les variables sont issues de l'estimation effectuée à l'instant précédent ou à certains des instants précédents. Par ailleurs, en fonction des besoins du système utilisateur du torseur d'efforts, la fréquence de mise en oeuvre du procédé peut être adaptée.

En fin d'itération, le module E établi les composantes estimées du torseur d'efforts en fonction d'au moins un vecteur Q de valeurs stocké. Dans le cas où les variables du vecteur Q sont les composantes du torseur, l'établissement est immédiat et, dans le cas où lesdites variables sont les déplacements, l'établissement peut être réalisé en sommant par exemple l'ensemble des forces de contact F_{c} calculées par le module M11.

On décrit ci-dessous deux variantes pour l'établissement d'au moins un nouveau vecteur Q de valeurs représentatives à introduire dans le modèle en fonction du résultat dudit test, dans lesquelles le modèle est inversible respectivement par minimisation des résidus et inversion ensembliste. Ainsi, cet établissement ne nécessite pas de mesures successives des déformations, de sorte à préserver la bande passante potentielle. En outre, le procédé prend en compte le caractère non linéaire des équations du module M11 afin de converger itérativement vers l'estimation des composantes du torseur.

Selon la première variante (figure 1), le test de pertinence T comprend la détermination des écarts entre les mesures de déformation calculées et lesdites mesures qui sont effectuées dans le même intervalle de temps.

Ainsi, en déterminant une valeur seuil correspondant à la précision de l'estimation, le test est négatif N dans le cas où un écart est supérieur à ladite valeur seuil et positif P dans le cas contraire. Par conséquent, tant que le seuil du test de pertinence T n'est pas atteint, l'itération se poursuit.

Par ailleurs, pour inverser le modèle, le procédé prévoit un module M2 utilisant une fonction de coût basée sur les équations dudit modèle, ladite fonction étant minimisée avec les écarts déterminés de sorte à établir le nouveau vecteur Q de valeurs représentatives qui compensent le mieux lesdits écarts. Pour ce faire, on peut utiliser des méthodes de type moindres carrées, quasi-Newton, gradient ou recherche d'extrema.

Selon la deuxième variante (figure 2), l'inversion ensembliste est réalisée en utilisant des valeurs représentatives qui sont sous la forme d'un intervalle déterminé a priori. Le test de pertinence T comprend alors un test d'inclusion du vecteur V_{c} d'intervalle de mesure calculé dans ledit vecteur Vₘ d'intervalle qui est mesuré. En particulier, l'intervalle des valeurs mesurées peut correspondre à la précision de la mesure.

Dans cette variante du procédé d'estimation, le test T est considéré comme négatif N en cas d'inclusion partielle, et comme positif P en cas d'inclusion totale. Dans ce dernier cas, le vecteur Q correspondant est stocké dans le module S1. Par ailleurs, en cas d'exclusion, le vecteur Q de valeurs correspondant est invalidé, notamment en étant stocké dans le module l, de sorte à être éliminé de l'itération.

En cas de test négatif N, un test T2 de la taille des intervalles du vecteur Q est réalisé, puis, en cas de taille d'un intervalle supérieure à un seuil, ledit intervalle est scindé dans le module S pour établir deux nouveaux vecteurs Q d'intervalle de valeurs à introduire chacun dans le modèle. Selon une réalisation, seul l'intervalle le plus grand est scindé. Par ailleurs, dans le cas où les tailles respectives de tous les intervalles sont inférieures au seuil, le vecteur est stocké dans le module S2 en tant que vecteur indéterminé puisqu'on ne sait pas s'il est pertinent ou non.

A l'issue de toutes les itérations, plusieurs vecteurs Q peuvent être stockés et les composantes estimées du torseur d'efforts sont alors établies par regroupement desdits vecteurs stockés.

Le procédé selon l'invention peut être mis en oeuvre en utilisant plusieurs mesures temporelles pour estimer les composantes d'un torseur d'efforts à un instant. Pour ce faire, un filtrage de l'estimation des composantes du torseur d'efforts peut être utilisé, par exemple un filtrage des estimations stockées, un filtrage des estimations des variables intermédiaires et/ou un filtrage des mesures effectuées.

En variante, on peut utiliser des estimateurs d'état (de type Filtre Kalman par exemple). Ceci nécessite des connaissances à priori sur le système (par exemple : la variation de la vitesse de la cage de rétention des billes ne dépasse pas une certaine valeur) ou l'introduction de mesures supplémentaires (par exemple : mesure de la vitesse de roue nous renseignant sur la vitesse de la cage de rétention des billes ou capteur de température). Ces connaissances sont fusionnées à celles issues de la mesure par jauges de déformation dans le but d'affiner l'estimation des composantes du torseur. Cette fusion peut s'effectuer soit en modifiant la fonction de coût du module M2 soit en ajoutant des contraintes mathématiques dans l'inversion ensembliste.

## Revendications

1. Procédé d'estimation des composantes du torseur d'efforts s'appliquant sur un palier comprenant un organe fixe, un organe tournant et au moins une rangée de corps roulants disposée entre lesdits organes pour permettre leur rotation relative, ledit procédé prévoyant de mesurer un vecteur (Vₘ) de N déformations d'au moins une zone de l'organe fixe dudit palier qui sont induites par ledit torseur **caractérisé en ce que** le procédé prévoit d'utiliser un modèle physique liant un vecteur (Q) d'au plus N valeurs représentatives des composantes dudit torseur à un vecteur de mesure des déformations, ledit procédé comprenant les étapes itératives suivantes :
- introduire un vecteur (Q) de valeurs représentatives dans le modèle pour calculer un vecteur (V_{c}) de mesure des déformations ;
- effectuer un test de pertinence (T) entre le vecteur (V_{c}) de mesure des déformations qui est calculé et ledit vecteur mesuré (Vₘ) ; et
o si le test (T) est négatif (N), établir au moins un nouveau vecteur (Q) de valeurs représentatives à introduire dans le modèle en fonction du résultat dudit test ; ou
o si le test (T) est positif (P), stocker le vecteur (Q) de valeurs introduit ;
dans lequel les composantes estimées du torseur d'efforts sont établies en fonction d'au moins un vecteur (Q) de valeurs stocké.

2. Procédé d'estimation selon la revendication 1, **caractérisé en ce que** le vecteur (Q) de valeurs représentatives comprend cinq variables suivant respectivement un degré de liaison du palier.

3. Procédé d'estimation selon la revendication 2, **caractérisé en ce que** les variables sont choisies parmi les composantes du torseur d'efforts ou les déplacements de l'organe tournant par rapport à l'organe fixe.

4. Procédé d'estimation selon l'une quelconque des revendications 1 à 3, **caractérisé en ce que** le vecteur (Q) de valeurs représentatives comprend en outre l'angle des corps roulants dans chacune des rangées de corps roulants.

5. Procédé d'estimation selon l'une quelconque des revendications 1 à 4, **caractérisé en ce que** le vecteur (Q) de valeurs représentatives comprend en outre la précharge (δ*_{ch}*) du palier.

6. Procédé d'estimation selon l'une quelconque des revendications 1 à 5, **caractérisé en ce que** le modèle physique comprend trois modules de modélisation (M11, M12, M13) de respectivement du lien entre le vecteur (Q) et de la zone de charge, du lien entre la zone de charge et les déformations de l'organe fixe et de la fonction de transfert du capteur de mesure, le calcul du vecteur (V_{c}) de mesure des déformations étant réalisé par ces modules pour déterminer successivement les forces de contact (F_{c}) entre les corps roulants et l'organe fixe, l'estimation des déformations (D) de la zone de l'organe fixe qui sont induites par lesdites forces de contact et les mesures associées auxdites déformations.

7. Procédé d'estimation selon la revendication 6, **caractérisé en ce que** les forces de contact (F_{c}) sont exprimées sous forme modale pour estimer les déformations (D) de la zone de l'organe fixe.

8. Procédé d'estimation selon l'une quelconque des revendications 1 à 7, **caractérisé en ce que** le test de pertinence (T) comprend la détermination des écarts entre les mesures de déformation calculées et lesdites mesures effectuées, ledit test étant négatif (N) dans le cas où un écart est supérieur à une valeur seuil et positif (P) dans le cas contraire.

9. Procédé d'estimation selon la revendication 8, **caractérisé en ce qu'**il prévoit l'utilisation d'une fonction de coût basée sur les équations du modèle, ladite fonction étant minimisée avec les écarts déterminés de sorte à établir le nouveau vecteur (Q) de valeurs représentatives.

10. Procédé d'estimation selon l'une quelconque des revendications 1 à 7, **caractérisé en ce que** les valeurs représentatives sont sous la forme d'un intervalle, le test de pertinence (T) comprenant un test d'inclusion du vecteur (V_{c}) d'intervalle de mesures qui est calculé dans ledit vecteur d'intervalle mesuré (Vₘ), ledit test étant négatif (N) en cas d'inclusion partielle et positif (P) en cas d'inclusion totale.

11. Procédé d'estimation selon la revendication 10, **caractérisé en ce que**, en cas de test négatif, un test (T1) de la taille des intervalles du vecteur (Q) d'intervalle de valeurs est réalisé, puis, en cas de taille d'un intervalle supérieure à un seuil, ledit intervalle est scindé pour établir deux nouveaux vecteurs (Q) d'intervalle de valeurs à introduire.

12. Procédé d'estimation selon la revendication 11, **caractérisé en ce que** les composantes estimées du torseur d'efforts sont établies par regroupement des vecteurs (Q) stockés.

13. Procédé d'estimation selon l'une quelconque des revendications 1 à 12, **caractérisé en ce qu'**il comprend un filtrage de l'estimation des composantes du torseur d'efforts ou de certaines des variables intermédiaires du calcul.

## Claims

1. Method for estimating components of a force wrench that are applied to a bearing comprising a stationary member, a rotating member and at least one row of rolling bodies arranged between said members to enable the relative rotation thereof, said method comprising measuring a vector (Vₘ) of N deformations of at least one zone of the stationary member of said bearing which are induced by said wrench, **characterised in that** the method comprises using a physical model linking a vector (Q) of at most N representative values of components of said wrench to a deformation measurement vector, said method comprising the following iterative steps:
- introducing a vector (Q) of representative values into the model in order to calculate a deformation measurement vector (V_{c});
- carrying out a relevance test (T) between the deformation measurement vector (V_{c}) which is calculated and said measured vector (Vₘ); and
-- if the test (T) is negative, establishing at least one new vector (Q) of representative values to be introduced into the model according to the result of said test; or
-- if the test (T) is positive, storing the introduced vector (Q) of values;
wherein the estimated components of the force wrench are established according to at least one vector (Q) of stored values.

2. Estimation method according to claim 1, **characterised in that** the vector (Q) of representative values comprises five variable respectively following a degree of association of the bearing.

3. Estimation method according to claim 2, **characterised in that** the variables are selected from the components of the force wrench or the displacements of the rotating member in relation to the stationary member.

4. Estimation method according to any of claims 1 to 3, **characterised in that** the vector (Q) of representative values further comprises the angle of the rolling bodies in each of the rows of rolling bodies.

5. Estimation method according to any of claims 1 to 4, **characterised in that** the vector (Q) of representative values further comprises the preload (δ_{ch}) of the bearing.

6. Estimation method according to any of claims 1 to 5, **characterised in that** the physical model comprises three modelling modules (M11, M12, M13) respectively of the link between the vector (Q) and the load zone, of the link between the load zone and the deformations of the stationary member and the transfer function of the measurement sensor, the calculation of the deformation measurement vector (V_{c}) being carried out by these modules in order to successively determine the contact forces (F_{c}) between the rolling bodies and the stationary member, the estimation of the deformations (D) of the zone of the stationary member which are induced by said contact forces and the measurements associated with said deformations.

7. Estimation method according to claim 6, **characterised in that** the contact forces (F_{c}) are expressed in modal form in order to estimate the deformations (D) of the zone of the stationary member.

8. Estimation method according to any of claims 1 to 7, **characterised in that** the relevance test (T) comprising determining differences between the calculated deformation measurements and said measurements carried out, said test being negative (N) if a difference is greater than a threshold value and positive (P) otherwise.

9. Estimation method according to claim 8, **characterised in that** it comprises using a cost function based on the equations of the model, said function being minimised with the differences determined in such a way as to establish the new vector (Q) of representative values.

10. Estimation method according to any of claims 1 to 7, **characterised in that** the representative values in the form of an interval, the relevance test (T) comprising a test of inclusion of the measurement interval vector (V_{c}) which is calculated in said measured interval vector (Vₘ), said test being negative (N) in the event of partial inclusion and positive (P) in the event of total inclusion.

11. Estimation method according to claim 10, **characterised in that**, in the event of a negative test, a test (T1) of the size of the intervals of the value interval vector (Q) is carried out and, in the event of a size of an interval greater than a threshold, said interval is split in order to establish two new value interval vectors (Q) to be introduced.

12. Estimation method according to claim 11, **characterised in that** comprising the estimated components of the force wrench are established by grouping stored vectors (Q) together.

13. Estimation method according to any of claims 1 to 12, **characterised in that** it comprises filtering the estimation of the components of the force wrench or some of the intermediary variables of the calculation.

## Patentansprüche

1. Verfahren zur Schätzung der Komponenten des Spanners von Beanspruchungen angewandt auf ein Lager umfassend ein festes Organ, ein drehendes Organ und zumindest eine Reihe von rollenden Körpern, die zwischen den Organen angeordnet ist, um deren relative Drehung zu erlauben, wobei das Verfahren vorsieht, einen Vektor (Vₘ) von N Verformungen von zumindest einer Zone des festen Organs des Lagers, die aus dem Spanner resultieren, zu messen, **dadurch gekennzeichnet, dass** das Verfahren vorsieht , ein physikalisches Modell zu verwenden, das einen Vektor (Q) von zuhöchst N repräsentativer Werte der Komponenten des Spanners mit einem Vektor zur Messung der Verformungen verbindet, wobei das Verfahren die folgenden iterativen Schritte umfasst:
- einen Vektor (Q) repräsentativer Werte in das Modell eingeben, um einen Vektor (V_{c}) zur Messung der Verformungen zu berechnen;
- einen Test der Stichhaltigkeit (T) zwischen dem Vektor (V_{c}) zur Messung der Verformungen, der berechnet wird, und dem gemessenen Vektor (Vₘ) ausführen; und
-- wenn der Test (T) negativ (N) ist, zumindest einen neuen Vektor (Q) repräsentativer Werte erstellen, der in Abhängigkeit vom Ergebnis des Tests in das Modell einzugeben ist; oder
-- wenn der Test (T) positiv (P) ist, den eingegebenen Vektor (Q) der Werte speichern;
in dem die geschätzten Komponenten des Spanners von Beanspruchungen in Abhängigkeit von zumindest einem Vektor (Q) gespeicherter Werte erstellt werden.

2. Verfahren zur Schätzung nach Anspruch 1, **dadurch gekennzeichnet, dass** der Vektor (Q) repräsentativer Werte fünf Variablen gemäß jeweils einem Verbindungsgrad des Lagers umfasst.

3. Verfahren zur Schätzung nach Anspruch 2, **dadurch gekennzeichnet, dass** die Variablen unter den Komponenten des Spanners von Beanspruchungen oder den Verschiebungen des drehenden Organs im Verhältnis zum festen Organ ausgewählt werden.

4. Verfahren zur Schätzung nach einem der Ansprüche 1 bis 3, **dadurch gekennzeichnet, dass** der Vektor (Q) repräsentativer Werte des Weiteren den Winkel der rollenden Körper in jeder Reihe rollender Körper umfasst.

5. Verfahren zur Schätzung nach einem der Ansprüche 1 bis 4, **dadurch gekennzeichnet, dass** der Vektor (Q) repräsentativer Werte des Weiteren die Vorlast (δ*_{ch}*) des Lagers umfasst.

6. Verfahren zur Schätzung nach einem der Ansprüche 1 bis 5, **dadurch gekennzeichnet, dass** das physikalische Modell drei Module zur Modellierung (M11, M12, M13) von jeweils der Verbindung zwischen dem Vektor (Q) und der Belastungszone, der Verbindung zwischen der Belastungszone und den Verformungen des festen Organs und der Transferfunktion des Sensors zur Messung umfasst, wobei die Berechnung des Vektors (V_{c}) zur Messung der Verformungen von diesem Modul realisiert wird, um sukzessiv die Kontaktkräfte (F_{c}) zwischen den rollenden Körpern und dem festen Organ, die Schätzung der Verformungen (D) der Zone des festen Organs, resultierend aus den Kontaktkräften und die mit den Verformungen verbundenen Messungen zu bestimmen.

7. Verfahren zur Schätzung nach Anspruch 6, **dadurch gekennzeichnet, dass** die Kontaktkräfte (F_{c}) in modaler Form ausgedrückt werden, um die Verformungen (D) der Zone des festen Organs zu schätzen.

8. Verfahren zur Schätzung nach einem der Ansprüche 1 bis 7, **dadurch gekennzeichnet, dass** der Test der Stichhaltigkeit (T) die Bestimmung der Abweichungen zwischen den berechneten Verformungsmessungen und den ausgeführten Messungen umfasst, wobei der Test in dem Fall negativ (N) ist, in dem eine Abweichung größer als ein Schwellenwert ist, und im entgegensetzten Fall positiv (P) ist.

9. Verfahren zur Schätzung nach Anspruch 8, **dadurch gekennzeichnet, dass** er die Verwendung einer Kostenfunktion basierend auf den Gleichungen des Modells vorsieht, wobei die Funktion derart mit den bestimmten Abweichungen minimiert wird, dass ein neuer Vektor (Q) repräsentativer Werte erstellt wird.

10. Verfahren zur Schätzung nach einem der Ansprüche 1 bis 7, **dadurch gekennzeichnet, dass** die repräsentativen Werte in Form eines Intervalls sind, wobei der Test der Stichhaltigkeit (T) einen Test der Inklusion des Intervallvektors (V_{c}) von Messungen, der im gemessenen Intervallvektor (Vₘ) berechnet wird, umfasst, wobei der Test in dem Fall der partiellen Inklusion negativ (N) ist und im Fall der totalen Inklusion positiv (P) ist.

11. Verfahren zur Schätzung nach Anspruch 10, **dadurch gekennzeichnet, dass** im Fall eines negativen Tests, ein Test (T1) der Größe des Intervalls des Intervallvektors (Q) von Werten realisiert wird, und anschließend der Intervall im Fall einer Intervallgröße über einer Schwelle aufgespaltet wird, um zwei neue Intervallvektoren (Q) von Werten, die einzugeben sind, erstellt werden.

12. Verfahren zur Schätzung nach Anspruch 11, **dadurch gekennzeichnet, dass** die geschätzten Komponenten des Spanners von Beanspruchungen durch das Zusammenlegen der gespeicherten Vektoren (Q) erstellt werden.

13. Verfahren zur Schätzung nach einem der Ansprüche 1 bis 12, **dadurch gekennzeichnet, dass** es eine Filterung der Schätzung der Komponenten des Spanners von Beanspruchungen oder von einigen der Zwischenvariablen der Berechnung umfasst.
